Europäisches Patentamt

European Patent Office

Office européen des brevets

(19)

(11) Veröffentlichungsnummer: **0 1 1 1 135**
**B1**

(12) # EUROPÄISCHE PATENTSCHRIFT

(45) Veröffentlichungstag der Patentschrift:
**10.01.90**

(21) Anmeldenummer: **83110741.2**

(22) Anmeldetag: **27.10.83**

(51) Int. Cl.⁴: **A 01 N 57/20, C 11 D 3/48**

(54) **Verwendung von Alkylmonophoshonsäuren als keimtötende Substanzen in sauren Lösungen.**

(30) Priorität: **04.11.82 DE 3240688**

(43) Veröffentlichungstag der Anmeldung:
**20.06.84 Patentblatt 84/25**

(45) Bekanntmachung des Hinweises auf die Patenterteilung:
**10.01.90 Patentblatt 90/2**

(84) Benannte Vertragsstaaten:
**AT BE CH DE FR GB IT LI NL**

(56) Entgegenhaltungen:
**FR-A- 2 280 706**
**FR-A- 2 343 806**
**US-A- 4 105 573**
**US-A- 4 273 768**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Bragulla, Siegfried, Sandstrasse 67, D-4019 Monheim 2 (DE)**

ACTORUM AG

## Beschreibung

Gegenstand der Erfindung ist die Verwendung von bestimmten Alkylmonophosphonsäuren als keimtötende Substanzen in sauren Lösungen.

Als Desinfektionswirkstoffe in sauren Lösungen sind schon verschiedene Substanzen bekannt, wie zum Beispiel quartäre Ammoniumverbindungen, Halogencarbonsäuren oder Iod, die jedoch anwendungstechnische Nachteile haben. Quartäre Ammoniumverbindungen zum Beispiel schäumen zu stark. Der Schaum muß durch Einsatz großer Mengen Antischaummittel, die sehr oft die Desinfektionswirkung beeinträchtigen, gedämpft werden. Auch lassen sich quartäre Ammoniumverbindungen nicht mit anionischen Tensiden mischen, die ihrerseits eine sehr gute Entfettungswirkung haben. Halogencarbonsäuren, wie zum Beispiel Iod-, Chlor- und Bromessigsäure, führen in sauren Reinigern zum Ausfällen von Eiweiß, das sich als Belag auf den zu reinigenden Oberflächen niederschlägt oder innerhalb des Reinigungssystems die Spritzdüsen verstopfen kann. Außerdem ist die Handhabung der genannten Halogencarbonsäuren nicht ungefährlich, da sie sehr stark ätzen. Auch die relativ hohe Toxizität dieser Verbindungen wirkt sich nachteilig auf den Einsatz in konfektionierten Reinigern aus.

In der FR-A-2 280 706 werden alkalische, pulverförmige oder flüssige Reinigungsmittel-Konzentrate auf Basis nichtionischer, anionischer und/oder amphoterer Tenside beschrieben, die als Lösungsvermittler Phosphonsäurederivate der allgemeinen Formel R–P(O)(OX)(OY) enthalten, in welcher R einen geradkettigen oder verzweigten Alkyl- oder Alkenylrest mit 8 bis 10 Kohlenstoffatomen, X und Y Wasserstoff, Alkalimetall, Ammonium oder Ethanolamin bedeuten. Der Gehalt der Reinigungsmittel-Konzentrate an Phosphonsäurederivaten beträgt 0,5 bis 5 Gew.-%, an den genannten Tensiden 1 bis 20 Gew.-%. Derartige Reinigungsmittel-Konzentrate können sowohl im Haushalt als auch in der Industrie Verwendung finden. In den Beispielen wird neben der n-Decanphosphonsäure insbesondere die n-Octanphosphonsäure genannt.

Aus der EP-A-9247 ist ferner die Verwendung von Alkylmonophosphonsäuren mit 8 bis 10 Kohlenstoffatomen im Gemisch mit Tensiden als Korrosionsinhibitor gegenüber Metallen in sauren Lösungen bekannt. Das Mischungsverhältnis von Alkylmonophosphonsäure zu Tensid beträgt 2:1 bis 1:10, vorzugsweise 1:1. Die Konzentration an Alkylmonophosphonsäure liegt im Bereich von 0,001 bis 0,5 g/l, vorzugsweise von 0,02 bis 0,2 g/l. Als Tenside kommen insbesondere nichtionogene Tenside zum Einsatz.

Demgegenüber lag der vorliegenden Erfindung die Aufgabe zugrunde, Desinfektionswirkstoffe zu finden, die bei gutem bakteriologischem Spektrum in kleinen Einsatzkonzentrationen in sauren Reinigern eine schnelle Bakterienabtötung bewirken.

Gegenstand der vorliegenden Erfindung ist dementsprechend die Verwendung von Alkylmonophosphonsäuren mit 4 bis 12 Kohlenstoffatomen in der Alkylkette im Gemisch mit Tensiden als keimtötende Substanzen in sauren Lösungen. Erfindungsgemäß werden bevorzugt Octan-1-phosphonsäure und/oder Decan-1-phosphonsäure verwendet.

Die Konzentration der Alkylmonophosphonsäuren, bezogen auf die Konzentration der zur Anwendung gelangenden Lösung, kann in dem Bereich von 0,01 bis 0,5, vorzugsweise 0,02 bis 0,2 g/l liegen. Diese Konzentration entspricht 10 bis 500 ppm, vorzugsweise 20 bis 200 ppm.

Die verwendeten Tenside können anionischen oder insbesondere nichtionischen Charakter haben. Es können auch Gemische verschiedener Tenside Anwendung finden. Zweckmäßigerweise werden jedoch insbesondere im Hinblick auf eine nicht erwünschte Schaumentwicklung nichtionogene Tenside, wie insbesondere Anlagerungsprodukte von Ethylenoxid und/oder Propylenoxid an Fettalkohole, Fettamine oder Fettsäuren mit 12 bis 18 Kohlenstoffatomen oder an Alkylphenole mit 6 nis 15 Kohlenstoffatomen in der Alkylkette eingesetzt.

Das Mischungsverhältnis in Gewichtsprozent von Alkylmonophosphonsäuren zu Tensiden liegt im Bereich von 1:1 bis 1:5, vorzugsweise wird jedoch ein Mischungsverhältnis von 1:4 angewendet.

Neben den Tensiden, die unter anderem auch eine Verbesserung der Löslichkeit der Alkylmonophosphonsäuren bewirken, können noch andere Lösungsvermittler, wie Cumolsulfonat und 1- oder 2-wertige kurzkettige Alkohole, wie Ethanol, Propanol, Glycol und Butyldiglycol zugesetzt werden.

Die Säurekonzentration in den sauren Lösungen, die zur Anwendung gelangen, kann im Bereich von 0,1 bis 2 Gewichtsprozent, vorzugsweise 0,5 bis 0,6 Gewichtsprozent, liegen. Als Säuren können HCl, $H_2SO_4$, $HNO_3$, Amidosulfonsäure und insbesondere Phosphorsäure verwendet werden.

Als beste Wirksubstanzen haben sich die Octan-1-phosphonsäure sowie Decan-1-phosphonsäure erwiesen. Diese haben bei Schaumfreiheit, dermatologischer und toxikologischer Unbedenklichkeit und schon im niedrigen Temperaturbereich in Säuren einen deutlichen Keimtötungseffekt.

Die erfindungsgemäß zur Anwendung gelangenden Alkylphosphonsäuren können als keimtötende Substanzen überall dort eingesetzt werden, wo Oberflächen aus Metall oder Emaille und vorzugsweise aus Glas und Kunststoff desinfiziert werden sollen.

Durch die nachstehenden Beispiele wird der Anmeldungsgegenstand erläutert.

Beispiel 1

Es wurde die keimtötende Wirkung von Octan-1-phosphonsäure in phosphorsaurer Lösung überprüft und dabei verschiedene Konzentrationen an Octan-1-phosphonsäure (A bis E) getestet.

Im vorliegenden Fall sowie bei den weiteren Beispielen wurde der von der «Deutschen Landwirtschafts-Gesellschaft e.V.» (DLG) ausgearbeitete Suspensionstest verwendet. Der ausgearbeitete Suspensionstest für Desinfektionsmittel wird wie folgt durchgeführt: Das Mittel wird hinsichtlich seiner Wirksamkeit gegen die in Tabelle 1 angegebenen Bakterienstämme getestet. Dabei wird das zu prüfende Mittel in standardisiertem Hartwasser (Gesamthärte: 15°d) angesetzt. Zur Kontrolle der bakteriziden Wirksamkeit werden jeweils 0,1 ml der Bakteriensuspension zu 10 ml Desinfektionsmittellösung gegeben und die Abtötungszeit in Minuten bei der Testtemperatur von 20 °C bestimmt.

|  | A | B | C | D | E |
|---|---|---|---|---|---|
| Octan-1-phosphonsäure | 0,0 | 0,3 | 0,5 | 1,0 | 1,3 Gew.% |
| Anlagerungsprodukt von 8 Mol EO an Nonylphenol | 2,0 | 2,0 | 2,0 | 2,0 | 2,0 Gew.% |
| Anlagerungsprodukt von 5 Mol EO und 4 Mol PO an Fettalkohol ($C_{12}$–$C_{14}$) | 4,0 | 4,0 | 4,0 | 4,0 | 4,0 Gew.% |
| Phosphorsäure, 100%ig | 37,5 | 37,5 | 37,5 | 37,5 | 37,5 Gew.% |
| Kondenswasser | 56,5 | 56,2 | 56,0 | 55,5 | 55,2 Gew.% |

EO = Ethylenoxid
PO = Propylenoxid

Die Abtötungszeiten sind in der Tabelle 1 angegeben.

Tabelle 1

Abtötungszeit in Minuten bei Testtemperatur von 20 °C (Suspensionstest DLG)
Wasserhärte: 15 °d
Konzentration der Lösungen in %

| Teststämme | A | | B | | C | | D | | E | |
|---|---|---|---|---|---|---|---|---|---|---|
|  | 0,5 | 1 | 0,5 | 1 | 0,5 | 1 | 0,5 | 1 | 0,5 | 1 |
| Staphylococcus aureus | 60 | 20 | 5 | 1 | 1 | 1 | 1 | 1 | 1 | 1 |
| Streptococcus faecalis | 40 | 40 | 20 | 10 | 10 | 5 | 10 | 2,5 | 2,5 | 1 |
| Pseudomonas fluorescens | 20 | 10 | 10 | 2,5 | 10 | 10 | 2,5 | 2,5 | 5 | 2,5 |
| Klebsiella aerogenes | 10 | 10 | 5 | 5 | 2,5 | 2,5 | 5 | 5 | 5 | 5 |

Beispiel 2

Es wurde die keimtötende Wirkungssteigerung wie im Beispiel 1 überprüft. Die Zusammensetzung der keimtötenden Reinigungsmittel war wie folgt:

|  | F | G |
|---|---|---|
| Phosphorsäure, 100%ig | 45,0 | 45,0 Gew.% |
| Anlagerungsprodukt von 5 Mol EO an Oleylalkohol | 0,4 | 0,4 Gew.% |
| Anlagerungsprodukt von 9 Mol EO und 10 Mol PO an Nonylphenol | 3,5 | 3,5 Gew.% |
| Anlagerungsprodukt von 12 Mol EO an Nonylphenol | 1,0 | 1,0 Gew.% |
| Octan-1-phosphonsäure | 0,0 | 1,3 Gew.% |
| Kondenswasser | 50,1 | 48,8 Gew.% |

EO = Ethylenoxid
PO = Propylenoxid

Die Abtötungszeiten sind in der Tabelle 2 angegeben.

Tabelle 2

Abtötungszeiten in Minuten bei Testtemperatur von 20 °C (Suspensionstest DLG)
Wasserhärte 15 °d
Konzentration der Lösungen in %

| Teststämme | F | | G | |
|---|---|---|---|---|
|  | 0,5 | 1 | 0,5 | 1 |
| Staphylococcus aureus | 60 | 60 | 2,5 | 1 |
| Streptococcus faecalis | 40 | 40 | 5 | 1 |
| Pseudomonas fluorescens | 20 | 1 | 5 | 1 |
| Klebsiella aerogenes | 10 | 10 | 2,5 | 2,5 |

Beispiel 3

Es wurden die keimtötende Wirksamkeit von Alkyl-1-phosphonsäuren mit einem Alkylrest von 4 bis 12 überprüft. Dabei wurden Reinigungsmittel verwendet, welche die in der Tabelle 3 angegebenen Zusammensetzungen aufwiesen.

Die Ergebnisse sind aus der Tabelle 4 ersichtlich.

Tabelle 3

| Rezepturen | Angaben in % | | | | | |
|---|---|---|---|---|---|---|
| | 1 | 2 | 3 | 4 | 5 | Nullwert |
| a. Butan-1-phosphonsäure | 1,0 | | | | | |
| b. Hexan-1-phosphonsäure | | 1,0 | | | | |
| c. Decan-1-phosphonsäure | | | 1,0 | | | |
| d. Dodecan-1-phosphonsäure | | | | 1,0 | | |
| e. Octan-1-phosphonsäure | | | | | 1,0 | |
| f. ohne Phosphonsäure-Zusatz | | | | | | |
| Anlagerungsprodukt von 12 Mol EO an Nonylphenol | 4,0 | 4,0 | 4,0 | 4,0 | 4,0 | 4,0 |
| Phosphorsäure, 100%ig | 37,5 | 37,5 | 37,5 | 37,5 | 37,5 | 37,5 |
| Kondenswasser | 57,5 | 57,5 | 57,5 | 57,5 | 58,5 | |

Tabelle 4

a bis f geben die verschiedenen Ergebnisse mit den in Tabelle 3 angeführten Alkyl-1-phosphonsäuren wieder

| Teststämme | a | | b | | c | | d | | e | | f | |
|---|---|---|---|---|---|---|---|---|---|---|---|---|
| Staphylococcus aureus | 40 | 5 | 40 | 5 | 1 | 1 | 10 | 10 | 2,5 | 2,5 | 20 | 20 |
| Streptococcus faecalis | 20 | 10 | 20 | 10 | 1 | 1 | 20 | 10 | 5 | 2,5 | 20 | 20 |
| Pseudomonas fluorescens | 2,5 | 1 | 2,5 | 2,5 | 1 | 1 | 5 | 2,5 | 5 | 2,5 | 10 | 2,5 |
| Klebsiella aerogenes | 5 | 2,5 | 2,5 | 1 | 2,5 | 2,5 | 5 | 1 | 5 | 2,5 | 2,5 | 1 |
| Konzentration der Lösung in %: | 0,5 | 1 | 0,5 | 1 | 0,5 | 1 | 0,5 | 1 | 0,5 | 1 | 0,5 | 1 |

**Patentansprüche**

1. Verwendung von Alkylmonophosphonsäuren mit 4 bis 12 Kohlenstoffatomen im Gemisch mit Tensiden als keimtötende Substanzen in sauren Lösungen.

2. Verwendung gemäß Anspruch 1, dadurch gekennzeichnet, daß das Mischungsverhältnis Alkylmonophosphonsäure zu Tensid 1:1 bis 1:5 beträgt.

3. Verwendung gemäß Anspruch 1 und 2, dadurch gekennzeichnet, daß die Konzentration der Alkylmonophosphonsäure in den sauren Lösungen 0,01 bis 0,5 g/l, vorzugsweise 0,02 bis 0,2 g/l beträgt.

4. Verwendung gemäß Anspruch 1 bis 3, dadurch gekennzeichnet, daß nichtionogene Tenside eingesetzt werden.

5. Verwendung gemäß Anspruch 1 bis 4, dadurch gekennzeichnet, daß Octan-1-phosphonsäure und/oder Decan-1-phosphonsäure eingesetzt werden.

**Claims**

1. The use of $C_{4-12}$ alkyl monophosphonic acids in admixture with surfactants as germicidal agents in acidic solutions.

2. The use claimed in claim 1, characterized in that the mixing ratio of alkyl monophosphonic acid to surfactant is from 1:1 to 1:5.

3. The use claimed in claims 1 and 2, characterized in that the concentration of the alkyl monophosphonic acid in the acidic solutions is from 0.01 to 0.5 g/l and preferably from 0.02 to 0.2 g/l.

4. The use claimed in claims 1 to 3, characterized in that nonionic surfactants are used.

5. The use claimed in claims 1 to 4, characterized in that octane-1-phosphonic acid and/or decane-1-phosphonic acid is/are used.

**Revendications**

1. Utilisation d'acides alkylmonophosphoniques comportant 4 à 12 atomes de carbone en mélange avec des tensioactifs, comme substances germicides dans les solutions acides.

2. Utilisation selon la revendication 1, caractérisée en ce que le rapport de mélange de l'acide
alkylmonophosphonique avec le tensioactif est
compris dans l'intervalle de 1:1 à 1:5.

3. Utilisation selon les revendications 1 et 2,
caractérisée en ce que la concentration de l'acide
alkylmonophosphonique dans les solutions acides est comprise dans l'intervalle de 0,01 à 0,5 g/l,
de préférence de 0,02 à 0,2 g/l.

4. Utilisation selon les revendications 1 à 3,
caractérisée en ce que les tensioactifs non ioniques sont employés.

5. Utilisation selon les revendications 1 à 4,
caractérisée en ce que de l'acide octane-1-phos-
phonique et/ou de l'acide décane-1-phosphonique
sont employés.